# FASCICULE DE BREVET EUROPEEN

(11) **EP 3 924 276 B1**
(45) Date de publication et mention de la délivrance du brevet: **18.10.2023**
(21) Numéro de dépôt: 20703486.9
(22) Date de dépôt: 12.02.2020
(51) Int. Cl.: B65G 15/34, B65G 15/40, B65G 15/42, B65G 15/46, B65G 15/36

(54) **BANDE TRANSPORTEUSE SANS FIN ET DISPOSITIF CONVOYEUR COMPRENANT UNE TELLE BANDE TRANSPORTEUSE**
ENDLOSFÖRDERBAND UND FÖRDERVORRICHTUNG MIT EINEM SOLCHEN FÖRDERBAND
ENDLESS CONVEYOR BELT AND CONVEYOR DEVICE COMPRISING SUCH A CONVEYOR BELT

(30) Priorité: 13.02.2019 FR 1901456
(43) Date de publication de la demande: 22.12.2021
(73) Titulaire: Liftvrac, 44140 Geneston (FR)
(72) Inventeur: BOURSIER, Marcel, 44310 SAINT-COLOMBAN (FR)
(74) Mandataire: Argyma
(86) Numéro de dépôt international: PCT/EP2020/053665
(87) Numéro de publication internationale: WO 2020/165293

(56) Documents cités:
- EP-A1- 0 630 832
- EP-A1- 2 406 155
- JP-U- S6 220 005
- JP-U- S55 129 208
- US-A- 3 661 244
- US-A- 4 000 809
- US-A1- 2010 018 841

## Description

### Domaine technique de l'invention

La présente invention concerne le domaine général des dispositifs convoyeurs utilisés pour déplacer des produits d'un niveau inférieur vers un niveau supérieur au moyen d'une bande transporteuse sans fin.

Elle concerne plus particulièrement les bandes transporteuses sans fin dont le corps plan, au repos, est déformable transversalement dans une configuration tubulaire.

Et elle concerne encore un dispositif convoyeur comprenant une telle bande transporteuse sans fin.

Un tel dispositif convoyeur trouve notamment, mais non exclusivement, son application dans le domaine des industries agro-alimentaires, intégré au sein d'une ligne de fabrication, de traitement ou d'emballage, par exemple pour des produits en vrac tels que de la viande hachée, des poissons ou morceaux de poissons, des légumes, du fromage râpé...

### Etat de la technique

Comme présenté dans les documents FR-2 933 964, EP-2 303 729 ou encore EP-2 406 155, on connait des dispositifs convoyeurs adaptés pour le transport et l'élévation de produits (en particulier des denrées alimentaires). En particulier, EP-2 406 155 divulgue une bande transporteuse selon le préambule de la renvendication 1.

De manière connue, un dispositif convoyeur comprend une bande transporteuse sans fin qui s'enroule autour de deux structures de renvoi d'extrémité, par exemple de type poulies, dont l'une motorisée permet l'entrainement de la bande transporteuse en rotation dans un mouvement de boucle sans fin autour des deux structures de renvoi.

Une telle bande transporteuse comprend un brin supérieur, ménagé en pente ascendante et supportant les produits à transporter, et un brin inférieur de retour.

La bande transporteuse comprend également de manière connue une face de dessus, désignée « face produit », en contact des produits à transporter, et une face de dessous, dite « face de guidage », comprenant des plots monoblocs en saillie régulièrement répartis, qui coopèrent avec les structures de renvoi du dispositif convoyeur pour assurer l'entrainement de la bande.

De manière connue, la bande transporteuse présente une configuration plane au niveau des deux structures de renvoi du dispositif convoyeur pour assurer le chargement et le déchargement des produits. Celle-ci est en outre déformable transversalement dans une configuration tubulaire (ou au moins sensiblement tubulaire), de manière à former une sorte d'auge ou de tube sur le brin supérieur dans la partie ascendante pour guider les produits et assurer leur élévation tout en limitant les risques de pertes de produits.

La bande transporteuse est plane au repos et le dispositif convoyeur comporte des moyens adaptés pour réaliser son cintrage afin d'obtenir la configuration tubulaire recherchée au niveau de la partie ascendante. Dans la configuration tubulaire, les deux extrémités latérales de la bande transporteuse se rejoignent pour former une zone de jonction permettant la fermeture du tube.

De plus, pour un fonctionnement optimal, la bande transporteuse déformable intègre dans son épaisseur une pluralité d'organes de renfort longitudinaux (câbles, sangles plates, etc.) adaptés pour limiter son allongement longitudinal.

Dans un tel dispositif convoyeur, la bande transporteuse suit une trajectoire courbe concave ascendante, juste après la structure de renvoi permettant le chargement des produits. L'épaisseur de la bande transporteuse doit être prévue suffisamment importante pour éviter la formation de plis dans cette portion courbe concave, au niveau de la zone de jonction des deux extrémités latérales de la bande.

Cependant, plus l'épaisseur de la bande augmente, plus les efforts nécessaires à mettre en oeuvre pour sa mise en configuration tubulaire sont importants, et plus les frottements de la bande sur les moyens de mise en configuration tubulaire sont importants. Cela entraine des efforts de traction très importants qui diminuent la durée de vie de la bande, ce qui présente un inconvénient important. L'épaisseur de la bande résulte ainsi d'un compromis entre la flexibilité pour permettre un cintrage lors de l'ascension et une déformation tubulaire (épaisseur faible) et la résistance à l'usure lors de la traction et du guidage (épaisseur forte).

On connaît une bande transporteuse formée d'une superposition de couches de matériau élastomère présentant des duretés différentes. La face produit est de manière connue fabriquée dans un matériau présentant une dureté faible, lui conférant une surface plus lisse sans résidus, ce qui est favorable au transport de produits et à son nettoyage. Un matériau souple permet également de former plus aisément la bande dans sa configuration tubulaire, sans introduire des contraintes trop importantes dans la bande. La face de guidage est généralement fabriquée dans un matériau présentant une dureté plus élevée, de manière à augmenter sa durée de vie en limitant les frottements sur les structures de renvoi.

De manière incidente, on connait du document US 3661244A1, un dispositif convoyeur permettant de former une bande transporteuse dans une configuration tubulaire. Pour cela, les bords latéraux de la bande comprennent une surépaisseur permettant d'entrainer les bords au moyen de galets. Les deux extrémités latérales de la face produit sont superposées de manière à fermer la bande dans sa configuration tubulaire. Cependant, une telle superposition n'est pas souhaitable parce qu'elle nécessite de courber la bande de manière importante pour permettre la superposition des bords latéraux, ce qui peut entrainer des contraintes importantes dans la bande. De plus, une telle superposition limite le volume de produit à transporter, puisqu'il réduit considérablement la surface en contact avec le produit.

On connait également du document US 4000809A1, un dispositif convoyeur comprenant une bande transporteuse formée dans une configuration tubulaire en intégrant un ressort qui la contraint dans cette configuration. Le dispositif convoyeur commande l'ouverture du ressort pour forcer la bande dans une configuration plane de manière à charger et décharger le produit à transporter. Pour renforcer la bande, celle-ci est plus épaisse au niveau de ses deux extrémités latérales accueillant le ressort. Cependant, comme décrit précédemment, une telle bande très épaisse est soumise continuellement à des efforts importants qui impactent fortement sa durée de vie.

Les bandes transporteuses décrites dans les documents US 3661244 A1 et US 4000809 A1 ne peuvent être réalisées dans plusieurs couches de dureté différentes telles que décrites précédemment sans entrainer des contraintes importantes dans la bande, qui serait en outre plus difficile à former dans une configuration tubulaire.

Afin de remédier à ces inconvénients, l'invention vise une bande transporteuse assez souple pour être mise dans une configuration tubulaire, sans générer de sur-contrainte dans la bande, tout en garantissant la durée de vie de la bande lors de son utilisation.

### Présentation de l'invention

Afin de remédier à l'inconvénient précité de l'état de la technique, la présente invention propose une bande transporteuse sans fin pour dispositif convoyeur selon la revendication 1, laquelle bande transporteuse comprend un corps de bande de largeur L et de plan médian longitudinal X, lequel corps de bande comprend une face de dessus destinée à recevoir des produits à transporter, une face de dessous opposée, destinée à coopérer avec des moyens d'entrainement constitutifs dudit dispositif convoyeur, et deux bords latéraux parallèles entre eux,
lequel corps de bande est déformable transversalement entre une configuration plane, au repos, et une configuration tubulaire ou au moins sensiblement tubulaire, dans laquelle les bords latéraux sont reliés bord à bord,
lequel corps de bande comprend deux zones de transition s'étendant longitudinalement sur ladite largeur L dudit corps de bande, les deux zones de transition étant situées à ¼ ou approximativement à ¼ de ladite largeur L, de part et d'autre dudit plan médian X, lesquelles zones de transition définissent entre elles une partie centrale de bande, ainsi que deux parties latérales de bande situées entre chacune d'elle et le bord latéral de bande à proximité; la bande transporteuse comprenant une couche supérieure réalisée en un premier matériau présentant une première dureté et formant ladite face de dessus, et une couche inférieure réalisée en un second matériau présentant une deuxième dureté et formant ladite face de dessous, la deuxième dureté de ladite couche inférieure étant supérieure à la première dureté de ladite couche supérieure, ladite couche inférieure comportant des évidements d'assouplissement, la couche inférieure comportant une épaisseur constante ou sensiblement constante, sans tenir compte desdits évidements d'assouplissement;
la bande transporteuse étant remarquable en ce qu'au moins une épaisseur desdites parties latérales de bande est supérieure à au moins une épaisseur de ladite partie centrale de bande, formant au moins une zone de surépaisseur sur chacune desdites parties latérales de bande, ladite zone de surépaisseur de chaque partie latérale de bande s'étendant en saillie de la face de dessus de la bande transporteuse de manière à former un relief, la face de dessus étant plane entre les zones de surépaisseur.

Ces surépaisseurs latérales assurent un renfort localisé qui permet d'éviter, ou tout au moins de limiter, la formation de plis sur la zone de jonction des deux parties latérales de bande, autrement dit sur les bords latéraux positionnés en vis-à-vis, dans la portion courbe concave précitée, lorsque cette bande est en configuration tubulaire. D'autre part, du fait de leur localisation latérale, les surépaisseurs n'impactent pas les efforts nécessaires pour mettre la bande transporteuse en configuration tubulaire.

Autrement dit, l'ajout de surépaisseurs localisées permet avantageusement de conserver une épaisseur globale de la bande assez fine pour permettre sa mise en forme tubulaire, tout en limitant l'apparition de contraintes de traction élevées.

Une surépaisseur sur la face de dessus permet en outre de participer au guidage des produits en formant une gouttière, la surface centrale plane permettant un nettoyage simple et rapide.

De plus, une liaison bord à bord de la bande transporteuse en configuration tubulaire permet de bénéficier d'un volume important de produits à transporter sans dégrader le produit, à l'inverse de la bande transporteuse de l'art antérieur dont les bords sont superposés. L'ajout de surépaisseurs sur les bords latéraux permet en outre d'augmenter l'étanchéité de la bande en configuration tubulaire, c'est-à-dire lorsque les bords latéraux sont positionnés en vis-à-vis.

D'autres caractéristiques non limitatives et avantageuses de la bande transporteuse conforme à l'invention, prises individuellement ou selon toutes les combinaisons techniquement possibles, sont les suivantes :
- au moins une épaisseur desdites parties latérales de bande est supérieure à toutes les épaisseurs de ladite partie centrale de bande ;
- l'épaisseur d'au moins une partie desdites parties latérales de bande, à partir du bord latéral de bande à proximité, est constante et supérieure à toutes les épaisseurs de ladite partie centrale de bande ;
- au moins une épaisseur desdites parties latérales de bande est supérieure d'au moins 15% (et encore de préférence d'au moins 30%, et encore de manière préférée d'au moins 50%) à au moins une épaisseur de ladite partie centrale de bande ;
- la bande transporteuse sans fin comprend une pluralité d'organes de renfort longitudinaux, disposés dans son épaisseur, adaptés pour limiter ses possibilités d'allongement longitudinal, lesquels organes de renfort sont positionnés uniquement sur lesdites zones de transition de ladite largeur L de bande, situées à ¼ ou approximativement à ¼ de ladite largeur L, de part et d'autre dudit plan médian X ;
- la bande transporteuse sans fin comprend des plots monoblocs en saillie, régulièrement répartis sur sa face de dessous, adaptés pour coopérer avec lesdits moyens d'entrainement dudit dispositif convoyeur pour assurer l'entrainement de la bande transporteuse.

Puisque selon l'invention, la face de dessus est formée d'un matériau présentant une dureté inférieure à la dureté de la face de dessous, les zones de surépaisseurs faisant saillie de la face de dessus, celles-ci sont formées du même matériau que la face de dessus. Une telle configuration permet de former les zones de surépaisseur dans un matériau présentant une dureté faible par rapport à la dureté de la face de dessous, limitant davantage l'apparition de contraintes de traction dans la bande lors de la formation de la configuration tubulaire.

Dans une forme de réalisation de l'invention, les organes de renfort longitudinaux sont centrés latéralement dans les zones de transition.

Dans une forme de réalisation alternative, chaque zone de transition comprenant un plan milieu, les organes de renfort longitudinaux sont décalés latéralement par rapport au plan milieu des zones de transition vers les extrémités de la bande transporteuse.

De préférence, la couche supérieure possède une épaisseur centrale constante et des portions latérales épaissies formant les zones de surépaisseur. Une épaisseur centrale constante permet d'obtenir une surface de bande importante pour le transport de produits.

De manière préférée, la couche inférieure possède une épaisseur inférieure à 1,1 mm, de préférence, inférieure à 1 mm, permettant de renforcer la bande avec une couche présentant une dureté plus importante tout en conservant une bande transporteuse souple pouvant être aisément formée dans une configuration tubulaire. De manière avantageuse, la surépaisseur locale de la couche supérieure permet de réduire l'épaisseur de la couche inférieure rigide. Il en résulte une réduction de l'usure et une amélioration de la durée de vie.

De manière préférée, chaque zone de surépaisseur s'étend de manière continue sur toute la longueur de la bande, permettant d'assurer une continuité du renfort localisé, en évitant la formation de plis dans l'ensemble de la bande.

L'invention concerne également un dispositif convoyeur comprenant une bande transporteuse selon l'invention, le dispositif convoyeur comprenant au moins un organe d'entrainement de ladite bande transporteuse, la bande transporteuse comprenant un corps de bande présentant une largeur et un plan médian s'étendant longitudinalement, le corps de bande comprenant une face de dessus destinée à recevoir des produits à transporter, une face de dessous opposée, destinée à coopérer avec ledit organe d'entrainement du dispositif convoyeur, et deux bords latéraux parallèles entre eux,
le corps de bande comprenant deux zones de transition s'étendant longitudinalement, les deux zones de transition étant positionnées de manière répartie de part et d'autre du plan médian et situées à ¼ de la largeur de la bande transporteuse,
les zones de transition définissant une partie centrale de bande, située entre les deux zones de transition, et deux parties latérales de bande situées de part et d'autre du plan médian entre l'une des zones de transition et le bord latéral de bande adjacent, chaque zone de transition comprenant un plan milieu,
la bande transporteuse comprenant au moins un organe de renfort monté dans chacune des zones de transition du corps de bande,
la bande transporteuse étant remarquable en ce que chaque organe de renfort est décalé latéralement par rapport au plan milieu de la zone de transition dans laquelle il est monté vers les extrémités de la bande transporteuse.

Un tel positionnement du câble de renfort permet de décaler la zone de renfort par rapport au plan milieu de la zone de transition de manière à former une zone de renfort dans le corps de bande plus proche des bords latéraux de la bande. Une telle configuration permet avantageusement de limiter de manière encore plus importante la formation de plis au niveau de la jonction des deux parties latérales de bande dans la portion courbe concave du dispositif convoyeur, lorsque la bande transporteuse est en configuration tubulaire.

Dans la configuration tubulaire, en l'absence d'organes de renfort, les plans milieux des zones de transition, situées au quart de la largeur de la bande de part et d'autre du plan médian, définissent la fibre neutre de la bande transporteuse, c'est-à-dire, le lieu où les déformations sont les plus faibles. Lorsque des organes de renfort sont présents, en particulier positionnés en dehors des plans milieux des zones de transition, la fibre neutre suit les organes de renfort. Le décalage de la fibre neutre vers les extrémités de la bande permet d'éviter des déformations lorsque la bande est cintrée en configuration tubulaire, ce qui augmente sa durée de vie et son étanchéité.

Dans une forme de réalisation de l'invention, chaque zone de transition présentant une largeur, chaque plot monobloc s'étendant latéralement sur toute la largeur de la zone de transition dans laquelle il est situé, chaque organe de renfort est positionné dans l'épaisseur de la bande transporteuse sous le plot monobloc de chaque zone de transition.

Dans une forme de réalisation alternative, la bande transporteuse comprend une pluralité de couples de plots monoblocs, chaque plot monobloc d'un même couple comprenant un bord latéral intérieur et un bord latéral extérieur, la distance entre les deux bords latéraux extérieurs de chaque couple de plots monoblocs définie la largeur de la zone de transition. Selon un aspect préféré, chaque organe de renfort s'étend sous le plot monobloc du couple de plots qui est situé à proximité de l'extrémité de la bande transporteuse.

La présente invention concerne encore un dispositif convoyeur pour le transport en particulier de produits en vrac, par exemple du type fromage râpé, légumes, viande hachée, poissons ou morceaux de poissons ..., ceci d'un niveau inférieur jusqu'à un niveau supérieur, lequel dispositif convoyeur comprend :
(i) une bande transporteuse sans fin telle que définie ci-dessus,
(ii) deux structures de renvoi d'extrémité, l'une inférieure amont et l'autre supérieure aval, au niveau desquelles structures de renvoi ladite bande transporteuse sans fin présente une configuration transversale plane ou sensiblement plane, la face de dessus de ladite bande transporteuse sans fin, destinée à recevoir lesdits produits, comportant, entre lesdites structures de renvoi, au moins un tronçon courbe concave et au moins un tronçon ascendant élévateur,
(iii) des moyens pour conformer ladite bande transporteuse sans fin dans une configuration tubulaire, sur une partie au moins de la longueur dudit tronçon courbe concave et dudit tronçon ascendant élévateur, avec ses deux bords latéraux en contact ou pratiquement en contact l'un avec l'autre sur une ligne s'étendant dans un plan vertical passant par le plan médian longitudinal X de la bande transporteuse.

Avantageusement, il est également question d'un procédé de formation d'une bande transporteuse telle que décrite précédemment, dans une configuration tubulaire, la bande transporteuse étant initialement dans une configuration plane au repos, le procédé de formation étant réalisé au moyen d'un dispositif convoyeur tel que décrit précédemment. Le procédé comprend :
- une étape de cintrage des bords latéraux de la bande transporteuse,
- une étape de positionnement des deux bords latéraux de la bande transporteuse en vis-à-vis l'un de l'autre de manière bord contre bord,
- une étape de formation d'un tube fermé par la mise en contact bord à bord des deux bords latéraux.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
La figure 1 est une vue schématique en élévation d'un dispositif convoyeur conforme à l'invention ;
La figure 2 montre une partie de la bande transporteuse selon l'invention qui équipe le dispositif convoyeur illustré sur la figure 1, vue en perspective, en configuration plane et du côté de sa face de dessus ;
La figure 3 montre la partie de bande transporteuse illustrée sur la figure 2, vue en perspective, en configuration plane et du côté de sa face de dessous ;
La figure 4 est une vue en coupe de la bande transporteuse selon le plan de coupe 4-4 de la figure 2 ;
La figure 5 est une vue agrandie d'une partie latérale de la bande transporteuse illustrée sur la figure 4 ;
La figure 6 est une vue en coupe d'une partie de la bande transporteuse selon le plan de coupe 6-6 de la figure 4 ;
La figure 7 montre une partie de la bande transporteuse des figures 2 à 6, illustrée ici en perspective et en configuration tubulaire ;
La figure 8 est une vue en coupe de la bande transporteuse selon le plan de coupe transversal A-A de la figure 7 ;
La figure 9 est une vue en coupe d'une partie latérale d'une variante de réalisation de la bande transporteuse selon l'invention ;
Les figures 10A à 10C sont des vues en coupe de la bande transporteuse selon des plans de coupe transversal U-U, V-V, W-W de la figure 1 représentant l'évolution de la bande transporteuse au cours du passage de la configuration plane à la configuration tubulaire ;
Les figures 11A et 11B sont des représentations schématiques d'une zone de transition comprenant un plot monobloc et une pluralité de câbles de renfort dans une configuration centrée et dans une configuration décalée ;
Les figures 12A et 12B sont des représentations schématiques d'une zone de transition comprenant un couple de plots monoblocs et une pluralité de câbles de renfort dans une configuration centrée et dans une configuration décalée ;
La figure 13 est une vue en coupe de la bande transporteuse selon un plan de coupe longitudinal représentant l'entrainement de la bande transporteuse par un organe d'entrainement.

Il est à noter que, sur ces figures, les éléments structurels et/ou fonctionnels communs aux différentes variantes peuvent présenter les mêmes références.

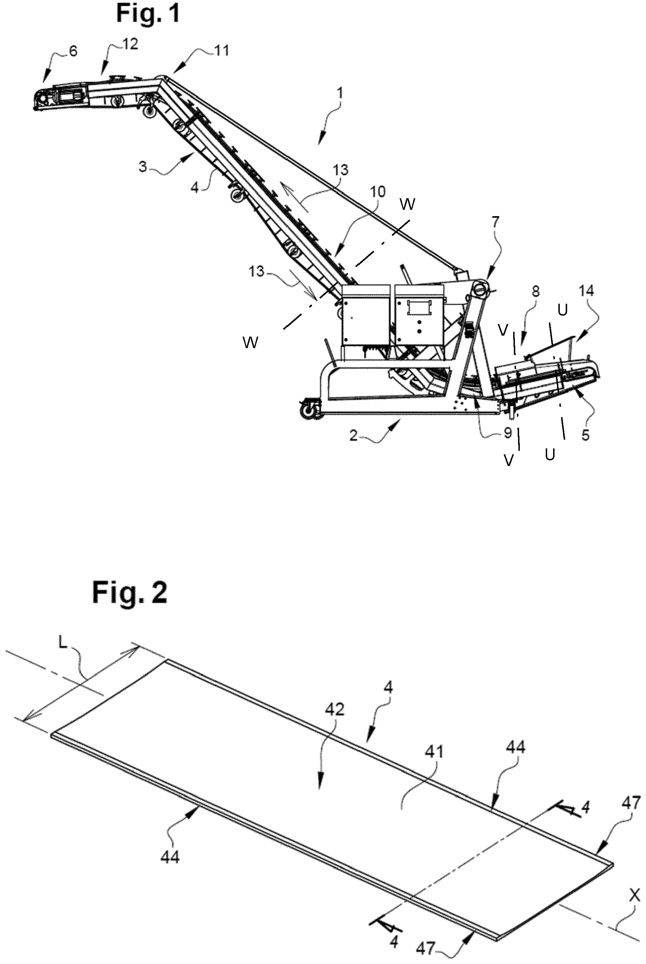

Le dispositif convoyeur 1 illustré sur la figure 1 comprend un chariot de convoyeur 2 qui porte une structure de convoyage 3.

Ce dispositif convoyeur 1 est adapté pour déplacer des produits du bas vers le haut, par exemple des produits alimentaires en vrac tels que de la viande, du poisson, du fromage râpé ou un légume.

La structure de convoyage 3 comprend une bande transporteuse 4 sans fin qui s'enroule autour de deux tambours d'extrémité (l'un inférieur amont 5, et l'autre supérieur aval 6), et qui est guidée par des organes de renvoi pour lui conférer une forme générale en S.

Cette structure de convoyage 3 est ici montée articulée sur le chariot de convoyeur 2 autour d'un axe pivot 7 horizontal. Le pivotement de la structure de convoyage 3 autour de l'axe pivot 7 est utilisé pour adapter la hauteur d'élévation du dispositif convoyeur 1.

Au sein du dispositif convoyeur 1 la bande transporteuse 4 comporte un brin supérieur dont la face supérieure constitue la surface de transport des produits, et un brin inférieur, formant un brin retour.

Le brin supérieur de la bande transporteuse 4 est guidé par la structure de convoyage 3 de sorte à définir, partant du tambour amont 5, un tronçon rectiligne de chargement 8 pour les produits transportés, suivi d'un tronçon courbe concave 9 et ascendant, suivi d'un tronçon ascendant 10 rectiligne, suivi lui-même d'un tronçon courbe convexe 11 , puis d'un tronçon de déchargement 12 rectiligne des produits, qui se termine par le tambour d'extrémité aval 6.

Les notions de concavité et de convexité mentionnées ci-dessus s'apprécient à partir d'une vue de dessus de la bande transporteuse 4 ou du dispositif convoyeur 1.

Le dispositif convoyeur 1 comporte des moyens classiques qui permettent de mettre en tension ou de détendre la bande transporteuse 4 sans fin.

D'autre part, l'un des tambours d'extrémité, avantageusement le tambour d'extrémité aval 6, est associé à une motorisation qui permet sa mise en rotation afin de constituer des moyens d'entraînement de la bande transporteuse 4, dans le sens des flèches directionnelles 13.

La bande transporteuse 4 est réalisée en matériau souple, par exemple en élastomère type polyuréthane, de manière à permettre sa déformation dans une direction transversale par rapport à sa longueur, en particulier pour permettre sa mise en configuration tubulaire.

Au niveau des tambours amont 5 et aval 6, la bande transporteuse 4 présente une configuration transversale plane ou sensiblement plane (comme représenté sur les figures 2 à 6 ainsi que 10A). En revanche, entre les tronçons de chargement 8 et de déchargement 12, le dispositif convoyeur 1 élévateur est structuré pour conformer la bande transporteuse 4 en configuration recourbée et plus particulièrement en configuration tubulaire, cela sur une majeure partie du tronçon courbe concave 9 , sur toute la longueur du tronçon ascendant 10 et sur une majeure partie du tronçon courbe convexe 11, mettant alors à profit ses caractéristiques de souplesse transversale, afin d'optimiser le transport ascendant des produits.

Au niveau du tronçon de chargement 8, la bande transporteuse 4 présente une configuration plane ou sensiblement plane, adaptée pour permettre la dépose des produits, par exemple par l'intermédiaire d'une trémie 14.

Ce tronçon de chargement 8 peut être structuré en pente descendante, comme illustré sur la figure 1 ; dans des variantes de réalisation, la pente descendante correspondante peut être moins prononcée. Le tronçon de chargement 8 peut aussi s'étendre horizontalement ou en légère pente ascendante, cela en particulier en fonction de la nature des produits à transporter.

La mise en configuration recourbée de la bande transporteuse 4 est initiée au niveau du tronçon de chargement 8, ou juste à la suite de celui-ci, au moyen d'organes longitudinaux de guidage en forme de fils, rails, profilés, galets, rouleaux ou autres, convenablement agencés.

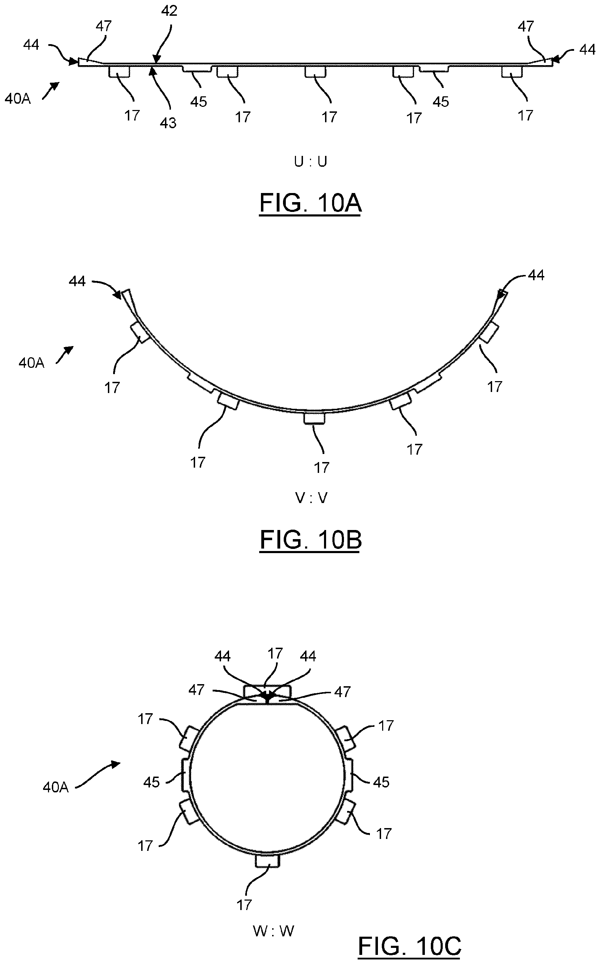

En amont de la configuration tubulaire complète, les organes de guidage du dispositif convoyeur 1 déforment progressivement la bande transporteuse 4 pour passer de la configuration transversale plane (au niveau du tambour d'extrémité 5 comme illustré à la figure 10A) vers la configuration tubulaire (Figure 10C) en préservant un espace adapté pour le chargement des produits.

Autrement dit, afin de former la bande transporteuse 4 dans la configuration tubulaire, en référence aux figures 10A, 10B, 10C, le brin supérieur 40A de la bande transporteuse 4 est déformé afin d'être progressivement courbé dans sa largeur. Les figures 10A à 10C représentent une coupe transversale de la bande transporteuse 4 dans les plans de coupe U : U, V : V et W : W répartis le long du tronçon ascendant 10 du dispositif convoyeur 1 comme cela est représenté sur la figure 1.

Dans une forme de réalisation préférée, le dispositif convoyeur 1 comprend six organes de guidage 17, par exemple des glissières, équitablement réparties sur toute la largeur de la bande transporteuse 4.

Pour la formation de la bande transporteuse 4 dans la configuration tubulaire, celle-ci initialement dans la configuration plane (figure 10A), arrive sur le tronçon ascendant 10, les bords de la bande transporteuse 4 glissent le long des organes de guidage 17 et sont progressivement ramenés l'un vers l'autre (figure 10 B). Les bords latéraux sont alors positionnés en vis-à-vis de manière à former une zone de jonction. La bande transporteuse 4 forme alors un tube fermé (figure 10C) par la mise en contact bord à bord des deux bords latéraux.

En aval de la configuration tubulaire complète, les organes de guidage déforment progressivement la bande transporteuse 4 pour passer de ladite configuration tubulaire vers une configuration plane (au niveau du tambour d'extrémité 6).

Partant de la structure du dispositif convoyeur 1 décrite ci-dessus, la bande transporteuse 4 étant entraînée par le tambour d'extrémité aval 6 motorisé, les produits peuvent être déposés sur le tronçon de chargement 8. Ils sont ensuite canalisés progressivement dans la partie tubulaire du tronçon courbe concave 9 ; ils s'accumulent dans la partie amont du tronçon ascendant 10 et ils sont transportés vers le haut jusqu'à la partie aval du dispositif convoyeur 1, sous l'effet du mouvement de la bande transporteuse 4, de sa conformation en tube et de la poussée des produits amont.

Arrivant au niveau du tronçon de déchargement 12, et plus particulièrement du tambour d'extrémité aval 6, les produits sont récupérés par toute structure adaptée telle qu'une trémie de réception, un convoyeur de transport, une goulotte de sortie ou autre.

De préférence, le dispositif convoyeur 1 comprend un racleur positionné au niveau du tambour d'extrémité aval 6 motorisé, de manière à garantir la récupération de tous les produits, en particulier des produits collants qui peuvent adhérer à la bande.

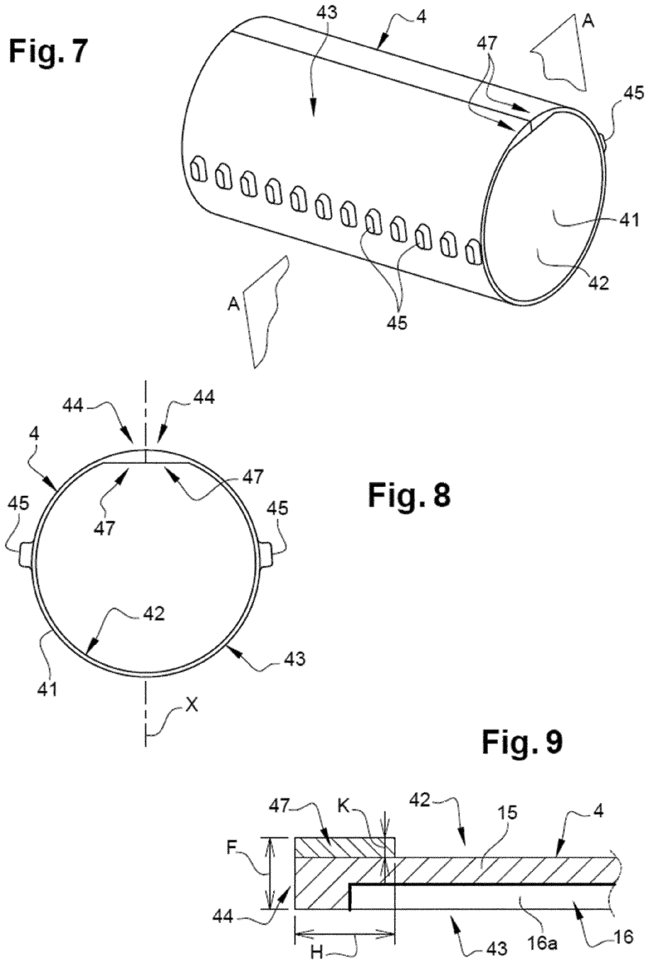

La bande transporteuse 4 selon l'invention est structurée de sorte à limiter, voire éviter, la formation de plis dans le tronçon courbe concave 9, au niveau de la ligne ou de la zone de jonction bord à bord des deux parties latérales de la bande transporteuse 4 configurée en tube (cette ligne/zone de jonction étant positionnée sur la génératrice supérieure du tube située dans le plan médian X de la bande, comme représenté sur les figures 7 et 8).

La structure de la bande transporteuse 4 est détaillée sur les figures 2 à 8 ; plus particulièrement, la bande transporteuse 4 est illustrée en configuration plane sur les figures 2 à 6 et en configuration tubulaire sur les figures 7 et 8.

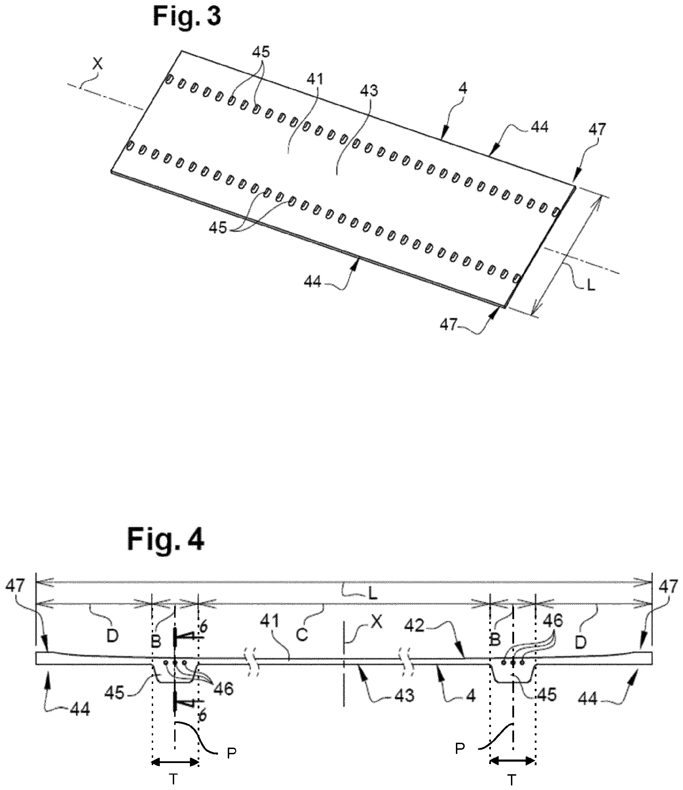

Comme représenté sur les figures 2 et 3, cette bande transporteuse 4 comprend un corps de bande 41 de largeur L et de plan médian longitudinal X.

Le corps de bande 41 comprend une face de dessus 42, une face de dessous 43 opposée, et deux bords latéraux 44 parallèles entre eux.

Par face de dessus 42, on entend une « face produit », c'est-à-dire la face configurée pour être mise en contact du produit à transporter. A l'inverse, la face de dessous 43 opposée correspond à une face dite « de guidage », c'est à dire la face en contact avec les tambours amont 5 et aval 6 du dispositif convoyeur 1, configurés pour entrainer la bande transporteuse 4.

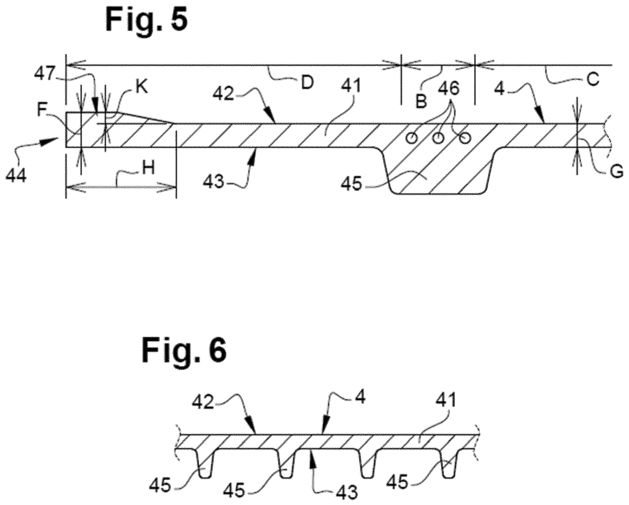

Par convention, le corps de bande 41 comprend deux zones dites « de transition » B s'étendant longitudinalement sur la largeur L de la bande transporteuse 4. Les deux zones de transition B sont situées à ¼ ou approximativement à ¼ de cette largeur L, de part et d'autre du plan médian X. Ces deux zones de transition B s'étendent parallèlement aux bords latéraux 44 et au plan médian X ; elles peuvent être linéaires ou s'étendre sur une petite largeur de bande (figures 4 et 5).

Les deux zones de transition B définissent entre elles une partie centrale de bande C, ainsi que deux parties latérales de bande D situées de part et d'autre du plan médian X, entre l'une des zones de transition B et le bord latéral 44 à proximité, c'est-à-dire le bord latéral 44 adjacent à la partie latérale de bande D.

Comme représenté sur la figure 4, chaque zone de transition B comprend un plan milieu P et s'étend sur une largeur T.

La face de dessus 42 du corps de bande 41 est lisse, dépourvue de protubérance(s).

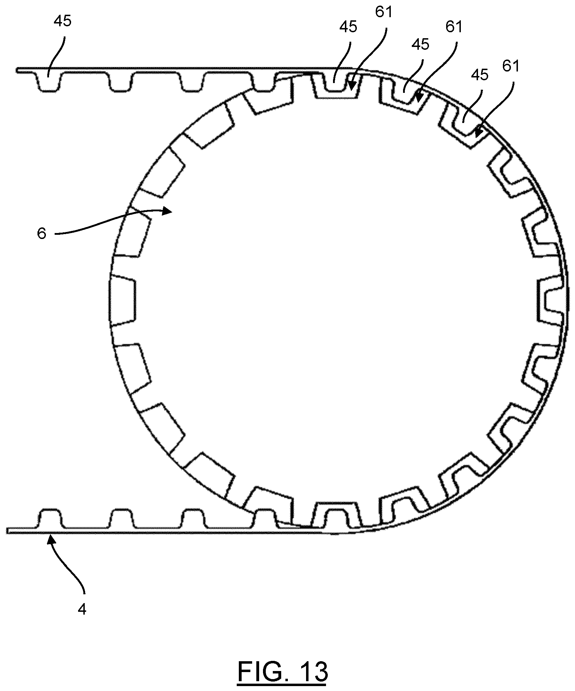

La face de dessous 43 comporte des plots monoblocs 45 en saillie adaptés pour coopérer avec des organes d'entrainement 61 du tambour d'extrémité aval 6 motorisé pour assurer l'entraînement et le guidage de la bande transporteuse 4 (comme cela est représenté sur la figure 13). Dans cet exemple, les organes d'entrainement 61 se présentent sous la forme d'évidements ou de crans, configurés pour coopérer avec les plots monoblocs 45 par complémentarité de forme.

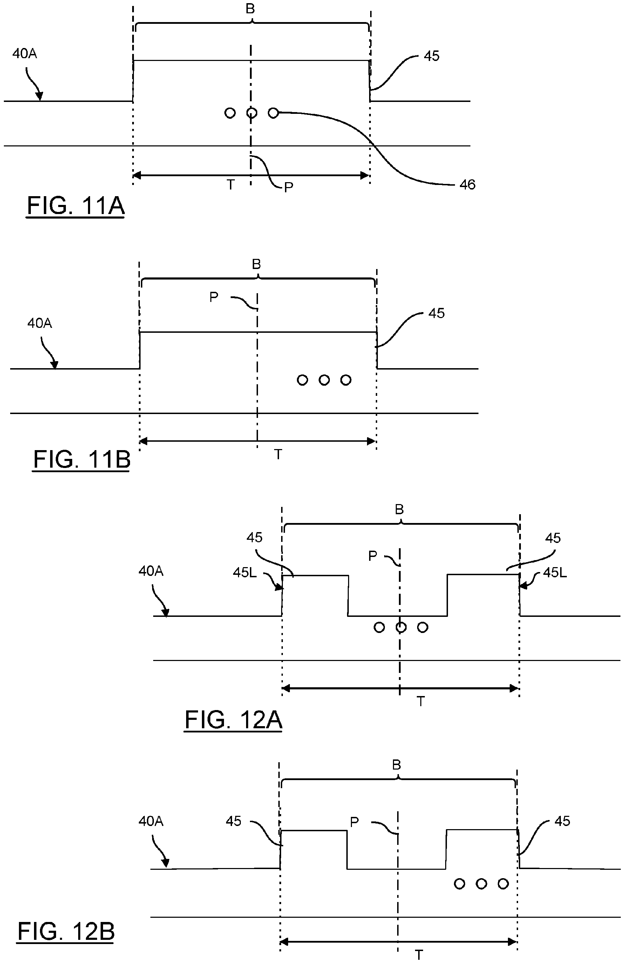

Selon une forme de réalisation préférée de l'invention, les plots monoblocs 45 sont agencés sur des lignes transversales régulièrement espacées ; ils sont au nombre de deux sur chaque ligne, positionnés de manière symétrique par rapport à l'axe médian X de la bande transporteuse 4, ici sur les deux zones de transition B, c'est-à-dire à ¼ ou approximativement à ¼ de la largeur L du corps de bande 41, de part et d'autre du plan médian X. Comme représenté sur la figure 11A, chaque plot monobloc 45 d'une même ligne transversale s'étend sensiblement sur toute la largeur T de la zone de transition B dans laquelle il est positionné.

De manière alternative, les plots monoblocs 45 sont au nombre de quatre sur chaque ligne transversale, positionnés par couple de deux symétriquement de part et d'autre de l'axe médian X de la bande transporteuse 4. De préférence dans une telle configuration, chaque couple de plots monoblocs 45 est positionné au niveau de l'une des zones de transition B.

Dans cet exemple représenté sur la figure 12A, chaque plot monobloc 45 d'un même couple comprend un bord latéral intérieur et un bord latéral extérieur 45L, la distance entre les deux bords latéraux extérieurs 45L de chaque couple de plots monoblocs 45 définie la largeur T de la zone de transition B dans laquelle il est situé. Autrement dit, la largeur T d'une zone de transition B correspond à la largeur d'un couple de plots monoblocs 45.

D'autre part, comme décrit dans le document EP-2 303 729A1, la bande transporteuse 4 est structurée pour limiter au maximum ses possibilités d'allongement longitudinal, en utilisant des éléments longitudinaux de renfort (câble(s) ou sangle(s) par exemple) intégrés dans la masse.

En l'occurrence, comme on peut le voir sur les figures 4 et 5, le corps de bande 41 de la bande transporteuse 4 comprend dans cet exemple deux groupes de trois câbles de renfort 46 longitudinaux, disposés dans son épaisseur, de manière à former des zones de renfort. Il va de soi que le nombre de câbles de renfort 46 peut être différent, par exemple la bande transporteuse 4 peut comprendre deux groupes de douze câbles de renfort 46. On remarque que chacun de ces groupes de câbles de renfort 46 est positionné au niveau de l'une des zones de transition B (c'est-à-dire que ces groupes de câbles de renfort 46 sont situés à ¼ ou approximativement à ¼ de ladite largeur L de bande, de part et d'autre du plan médian X).

De la sorte, les organes de renfort 46 suivent ainsi la fibre neutre de la bande transporteuse 4 en configuration tubulaire et permettent d'améliorer sa résistance mécanique. Autrement dit, les organes de renfort 46 sont positionnés proche de la fibre neutre de la bande transporteuse 4 sans câble de renfort et permettent ainsi d'améliorer la résistance mécanique (en particulier la capacité de traction) tout en limitant les contraintes dans la bande transporteuse 4.

Dans une première forme de réalisation, représenté sur la figure 11A, chaque groupe de câbles de renfort 46 est positionné sensiblement de manière centrée sur chaque zone de transition B par rapport à sa largeur T. Autrement dit, dans le cas de trois câbles de renfort 46, le câble de renfort 46 central est aligné avec le plan milieu P de la zone de transition B (comme représenté sur la figure 4).

Dans une deuxième forme de réalisation, représentée sur la figure 11B, chaque groupe de câbles de renfort 46 est décalé latéralement par rapport au plan milieu P de chaque zone de transition B vers les extrémités de la bande transporteuse 4. Une telle configuration permet avantageusement de renforcer les parties latérales de bande D, permettant de s'assurer de l'absence de formation de plis au niveau de la jonction des bords latéraux 44, lorsque la bande transporteuse 4 est placée dans sa configuration tubulaire.

Dans le cas d'une bande transporteuse 4 comprenant quatre plots sur chaque ligne transversale, c'est à dire comprenant deux couples de plots, les câbles de renfort 46 sont de préférence décalés latéralement par rapport au plan milieu P de chaque zone de transition B vers les extrémités de la bande transporteuse 4. De préférence encore, les câbles de renfort 46 sont positionnés sous le plot monobloc 45 du couple de plots positionné le plus proche des extrémités latérales de la bande transporteuse 4, comme cela est représenté sur la figure 12B. Il va de soi que les câbles de renfort 46 peuvent également être positionnés de manière centrée sur chaque zone de transition B par rapport à sa largeur T, comme cela est représenté sur la figure 12A.

Dans une forme de réalisation préférée, la bande transporteuse 4 selon la présente invention se caractérise par le fait qu'elle ne comporte pas une épaisseur régulière sur toute la largeur L de son corps de bande 41, et plus particulièrement par le fait qu'au moins une épaisseur F de ses parties latérales de bande D est supérieure à au moins une épaisseur G de sa partie centrale de bande C, formant ainsi au moins une surépaisseur latérale 47 sur chacune desdites parties latérales de bande D.

Comme cela est représenté sur la figure 4, les surépaisseurs latérales 47 selon l'invention sont configurées pour faire saillie de la face de dessus 42 de la bande transporteuse 4, la face de dessus 42 étant plane entre les zones de surépaisseur 47.

Dans ce cadre, de préférence, au moins une épaisseur F desdites parties latérales de bande D est supérieure à toutes les épaisseurs G de ladite partie centrale de bande C. Et encore de préférence, l'épaisseur F d'au moins une partie desdites parties latérales de bande D, à partir du bord latéral 44 de bande adjacent, est constante et supérieure à toutes les épaisseurs G de ladite partie centrale de bande C.

De telles surépaisseurs latérales 47 (visibles sur les figures 2, 3, 4, 5, 7 et 8) confèrent à la bande transporteuse 4 un renfort localisé qui permet d'éviter, ou tout au moins de limiter, la formation de plis sur la zone de jonction des deux bords latéraux de bande 44, en particulier dans le tronçon courbe concave 9, cela sans (ou sans trop) pénaliser les efforts nécessaires pour mettre la bande transporteuse 4 en configuration tubulaire.

Les surépaisseurs latérales 47 peuvent être réalisées d'un seul tenant avec la matière du corps de bande 41, lorsqu'un tel corps de bande 41 est réalisé dans un matériau élastique présentant une dureté faible (par exemple comme c'est le cas dans le mode de réalisation représenté sur les figures 2 à 8), ou être constituées par des éléments rapportés et solidarisés avec le corps de bande 41 (par exemple comme illustré sur la figure 9).

De préférence ces surépaisseurs latérales 47 sont ménagées du côté de la face de dessus 42 du corps de bande 41.

De préférence encore, les surépaisseurs latérales 47 s'étendent à partir des deux bords latéraux 44 et sur une longueur H qui est inférieure à la longueur des parties latérales de bande D. Les surépaisseurs latérales 47 sont identiques sur toute la longueur de la bande transporteuse 4.

Comme on peut le voir dans le mode de réalisation des figures 2 à 8, partant des bords latéraux 44, ces surépaisseurs latérales 47 peuvent avoir une partie d'épaisseur maximale K constante, suivie d'une partie d'épaisseur décroissante jusqu'à aboutir à l'épaisseur G de la partie centrale de bande C.

Comme illustré sur la figure 9, les surépaisseurs latérales 47 peuvent comporter une épaisseur constante sur toute leur longueur H.

Les dimensions en épaisseur maximale K et en longueur H des surépaisseurs latérales 47 sont adaptées selon le résultat recherché en termes d'effort tolérable pour le cintrage de la bande transporteuse 4 et d'élimination des plis précités.

Dans ce cadre, de préférence au moins une épaisseur F desdites parties latérales de bande D est supérieure d'au moins 15%, encore de préférence d'au moins 30%, et encore de manière préférée d'une valeur supérieure à 50%, à au moins une épaisseur G de la partie centrale de bande C.

A titre purement indicatif, pour un corps de bande 41 dont la largeur L est de 350 mm et dont l'épaisseur G de la partie centrale C est de 6 mm, les surépaisseurs latérales 47 peuvent avoir une épaisseur maximale K de l'ordre de 2,5 mm à 4 mm et s'étendre sur une longueur H de l'ordre de 10 mm à 30 mm.

La figure 9 est une vue partielle en coupe transversale qui illustre une variante de réalisation d'une bande transporteuse 4 selon l'invention, cette bande transporteuse étant du type décrite dans le document EP-2 406 155 A1, c'est-à-dire la bande transporteuse 4 comprend deux ou trois couches superposées réalisées en matériaux élastomères différents. Par l'expression « élastomères différents », on entend que les différentes couches sont réalisées dans un même matériau élastomère présentant des duretés différentes. A titre d'exemple, chaque couche peut être réalisée dans un matériau élastomère 70 Shore A, 80 Shore A, 54 Shore D ..., le premier chiffre correspondant à une valeur de dureté qualifié sur une échelle de dureté, représenté par la lettre A ou D, plus ou moins élevée. Les échelles de dureté Shore A et D sont connues de l'homme du métier et notamment décrites dans les normes ISO868, ASTMD 2240, DIN 535050.

Selon l'invention, la bande transporteuse 4 comporte une couche supérieure 15 réalisée en un premier matériau, formant ladite face de dessus 42, et une couche inférieure 16 réalisée en un second matériau, formant ladite face de dessous 43, la dureté de ladite couche inférieure 16 étant supérieure à la dureté de ladite couche supérieure 15, en particulier pour limiter les frottements sur les moyens d'entrainement et de guidage du dispositif convoyeur 1.

Dans cette forme de réalisation, les zones de surépaisseur 47 faisant saillie de la face de dessus 42, celles-ci sont formées de préférence dans la couche supérieure 15. Les surépaisseurs latérales 47 sont ainsi réalisées dans le premier matériau présentant une dureté inférieur à la dureté de la face de dessous 43.

Aussi, la couche supérieure 15 possède de préférence une épaisseur centrale constante et des bords latéraux épaissis formant les zones de surépaisseur 47, permettant de bénéficier des avantages des zones de surépaisseurs tout garantissant une surface de la face produit suffisamment importante pour assurer le transport d'un grand nombre de produits.

De préférence, la couche inférieure 16 possède une épaisseur centrale constante de préférence inférieure à 1,1 mm, de préférence encore, inférieure à 1 mm. Ainsi la couche présentant une dureté importante possède une épaisseur réduite, de manière à ne pas engendrer de sur-contraintes dans la bande transporteuse 4 lors de la mise en configuration tubulaire.

En résumé, la bande transporteuse 4 présente une face en contact avec les moyens d'entrainement et de guidage du dispositif convoyeur 1 présentant une dureté suffisante pour limiter les frottements de la bande transporteuse 4 avec les moyens d'entrainement et de guidage. La couche supérieure 15 et les surépaisseurs latérales 47 étant réalisées dans un matériau présentant une dureté plus faible, celles-ci sont plus flexibles. Aussi, une telle configuration permet avantageusement de renforcer les bords latéraux 44 suffisamment pour limiter la formation de plis lors de la mise en configuration tubulaire de la bande transporteuse 4, tout en limitant les efforts de traction dans le corps de bande 41.

La couche inférieure 16 comporte selon l'invention des évidements d'assouplissement 16a qui permettent de diminuer la résistance aux déformations longitudinales de la bande transporteuse 4.

Selon l'invention, la couche inférieure 16 comporte une épaisseur constante ou sensiblement constante (sans tenir compte des évidements d'assouplissement 16a), et les surépaisseurs latérales 47 sont réalisées au niveau de la couche supérieure 15 en matériau de dureté moindre.

En l'occurrence les surépaisseurs latérales 47 sont réalisées au moyen de bandes de matériau rapportées et solidarisées sur les côtés de la face de dessus de la couche supérieure 15. Le matériau de ces bandes rapportées peut être identique à celui de la couche supérieure 15, ou différent.

D'autres variantes de réalisation peuvent être dépourvues de tels évidements d'assouplissement 16a.

Comme on peut le voir sur les figures 7 et 8, lorsque la bande transporteuse 4 est en configuration tubulaire, les deux surépaisseurs latérales 47 sont rapprochées l'une de l'autre et viennent en contact, ou pratiquement en contact au niveau d'une génératrice supérieure du tube située dans le plan vertical médian X. Autrement dit, dans une forme de réalisation préférée, les bords latéraux 44 sont configurés pour être joints bord à bord lors de la mise en configuration tubulaire de la bande transporteuse 4.

Les surépaisseurs latérales 47 renforcent donc la zone de jonction, ce qui permet de limiter voire d'éviter la formation de plis sur les bords latéraux 44 de la bande transporteuse 4, dans le tronçon courbe concave 9, lorsque la bande transporteuse 4 est en configuration tubulaire.

D'autre part, ces surépaisseurs latérales 47 réalisées dans un matériau de faible dureté et localisées en partie supérieure du tube n'ont pas, ou peu, d'effets néfastes sur les efforts nécessaires à la mise en configuration tubulaire de la bande transporteuse 4 qui sont en majeure partie appliqués sur les zones de transition B, c'est-à-dire sur les zones situées à ¼ ou approximativement à ¼ de ladite largeur L, de part et d'autre du plan médian X.

## Revendications

1. Bande transporteuse (4) sans fin pour dispositif convoyeur, laquelle bande transporteuse (4) comprend un corps de bande (41) de largeur (L) et de plan médian longitudinal (X), lequel corps de bande (41) comprend une face de dessus (42) destinée à recevoir des produits à transporter, une face de dessous (43) opposée, destinée à coopérer avec des moyens d'entrainement (5, 6) constitutifs dudit dispositif convoyeur (1), et deux bords latéraux (44) parallèles entre eux,
lequel corps de bande (41) est déformable transversalement entre une configuration plane, au repos, et une configuration tubulaire ou au moins sensiblement tubulaire, dans laquelle les deux bords latéraux (44) sont reliés bord à bord,
lequel corps de bande (41) comprend deux zones de transition (B) s'étendant longitudinalement sur ladite largeur (L) dudit corps de bande (41), les deux zones de transition (B) étant situées à ¼ ou approximativement à ¼ de ladite largeur (L), de part et d'autre dudit plan médian (X),
lesquelles zones de transition (B) définissent entre elles une partie centrale de bande (C), ainsi que deux parties latérales de bande (D) situées entre chacune d'elle et le bord latéral (44) de bande à proximité,
la bande transporteuse comprenant une couche supérieure (15) réalisée en un premier matériau présentant une première dureté et formant ladite face de dessus (42), et une couche inférieure (16) réalisée en un second matériau présentant une deuxième dureté et formant ladite face de dessous (43), la deuxième dureté de ladite couche inférieure (16) étant supérieure à la première dureté de ladite couche supérieure (15),
ladite couche inférieure (16) comportant des évidements d'assouplissement (16a), la couche inférieure (16) comportant une épaisseur constante ou sensiblement constante, sans tenir compte desdits évidements d'assouplissement (16a),
la bande transporteuse étant **caractérisée en ce qu'**au moins une épaisseur (F) desdites parties latérales de bande (D) est supérieure à au moins une épaisseur (G) de ladite partie centrale de bande (C), formant au moins une zone de surépaisseur (47) sur chacune desdites parties latérales de bande (D), ladite zone de surépaisseur (47) de chaque partie latérale de bande (D) s'étendant en saillie de la face de dessus (42) de la bande transporteuse (4) de manière à former un relief, la face de dessus (42) étant plane entre les zones de surépaisseur (47).

2. Bande transporteuse sans fin selon la revendication 1, **caractérisée en ce qu'**au moins une épaisseur (F) desdites parties latérales de bande (D) est supérieure à toutes les épaisseurs (G) de ladite partie centrale de bande (C).

3. Bande transporteuse sans fin selon l'une quelconque des revendications 1 ou 2, **caractérisée en ce que** l'épaisseur (F) d'au moins une partie desdites parties latérales de bande (D), à partir du bord latéral (44) de bande à proximité, est constante et supérieure à toutes les épaisseurs (G) de ladite partie centrale de bande (C).

4. Bande transporteuse sans fin selon l'une quelconque des revendications 1 à 3, **caractérisée en ce que** au moins une épaisseur (F) desdites parties latérales de bande (D) est supérieure d'au moins 15% à au moins une épaisseur (G) de ladite partie centrale de bande (C).

5. Bande transporteuse sans fin selon la revendication 4, **caractérisée en ce que** au moins une épaisseur (F) desdites parties latérales de bande (D) est supérieure d'au moins 30% à au moins une épaisseur (G) de ladite partie centrale de bande (C).

6. Bande transporteuse sans fin selon la revendication 5, **caractérisée en ce que** au moins une épaisseur (F) desdites parties latérales de bande (D) est supérieure d'au moins 50% à au moins une épaisseur (G) de ladite partie centrale de bande (C).

7. Bande transporteuse sans fin selon l'une des revendications 1 à 6, **caractérisée en ce que** la couche supérieure (15) possède une épaisseur centrale constante et des portions latérales épaissies formant les zones de surépaisseur (47).

8. Bande transporteuse sans fin selon l'une des revendications 1 à 7, **caractérisée en ce que** la couche inférieure (16) possède une épaisseur inférieure à 1,1 mm, de préférence, inférieure à 1 mm.

9. Bande transporteuse sans fin selon l'une quelconque des revendications 1 à 8, **caractérisée en ce qu'**elle comprend une pluralité d'organes de renfort longitudinaux (46), disposés dans son épaisseur, adaptés pour limiter ses possibilités d'allongement longitudinal, lesquels organes de renfort (46) sont positionnés uniquement sur lesdites zones de transition (B) de ladite largeur (L) de bande, situées à ¼ ou approximativement à ¼ de ladite largeur (L), de part et d'autre dudit plan médian (X).

10. Bande transporteuse sans fin selon la revendication 9, **caractérisée en ce que** les organes de renfort longitudinaux (46) sont centrés latéralement dans les zones de transition (B).

11. Bande transporteuse sans fin selon la revendication 9, **caractérisée en ce que**, chaque zone de transition comprenant un plan milieu, les organes de renfort longitudinaux (46) sont décalés latéralement par rapport au plan milieu des zones de transition (B) vers les extrémités de la bande transporteuse.

12. Bande transporteuse sans fin selon l'une quelconque des revendications 1 à 11, **caractérisée en ce qu'**elle comprend des plots monoblocs (45) en saillie, régulièrement répartis sur sa face de dessous (43), adaptés pour coopérer avec lesdits moyens d'entrainement (6) dudit dispositif convoyeur (1) pour assurer l'entrainement de ladite bande transporteuse (4).

13. Dispositif convoyeur pour le transport en particulier de produits en vrac, par exemple du type fromage râpé, légumes, viande hachée, poissons ou morceaux de poissons, ceci d'un niveau inférieur jusqu'à un niveau supérieur, lequel dispositif convoyeur (1) comprend :
- une bande transporteuse sans fin (4) selon l'une quelconque des revendications 1 à 12,
- deux structures de renvoi d'extrémité (5, 6) l'une inférieure amont (5) et l'autre supérieure aval (6), au niveau desquelles structures de renvoi (5, 6) ladite bande transporteuse sans fin (4) présente une configuration transversale plane ou sensiblement plane, la face de dessus (42) de ladite bande transporteuse sans fin (4), destinée à recevoir lesdits produits, comportant, entre lesdites structures de renvoi (5, 6), au moins un tronçon courbe (9) concave et au moins un tronçon ascendant (10) élévateur,
- des moyens pour conformer ladite bande transporteuse sans fin (4) dans une configuration tubulaire, sur une partie au moins de la longueur dudit tronçon courbe (9) concave et dudit tronçon ascendant (10) élévateur, avec ses deux bords latéraux (44) en contact ou pratiquement en contact l'un avec l'autre sur une ligne s'étendant dans un plan vertical passant par le plan médian longitudinal (X) de ladite bande transporteuse (4).

## Patentansprüche

1. Endlosförderband (4) für Fördervorrichtung, wobei das Förderband (4) einen Bandkörper (41) mit einer Breite (L) und einer Längsmittenebene (X) umfasst, wobei der Bandkörper (41) eine Oberseite (42) umfasst, die zur Aufnahme der zu transportierenden Produkte bestimmt ist, eine gegenüberliegende Unterseite (43), die zum Zusammenwirken mit konstitutiven Antriebsmitteln (5, 6) der Fördervorrichtung (1) bestimmt ist, und zwei zueinander parallele Seitenränder (44),
wobei der Bandkörper (41) zwischen einer ebenen Konfiguration in Ruhe und einer schlauchförmigen oder mindestens etwa schlauchförmigen Konfiguration, in der die zwei Seitenränder (44) Rand an Rand verbunden sind, quer verformbar ist,
wobei der Bandkörper (41) zwei Übergangsbereiche (B) umfasst, die sich längs über die Breite (L) des Bandkörpers (41) erstrecken, wobei sich die zwei Übergangsbereiche (B) bei ¼ oder zirka ¼ der Breite (L) beiderseits der Mittenebene (X) befinden,
wobei die Übergangsbereiche (B) zwischen sich einen zentralen Bandteil (C) sowie zwei seitliche Bandteile (D) definieren, die sich zwischen jedem von ihnen und dem seitlichen Bandrand (44) in der Nähe befinden,
wobei das Förderband eine obere Schicht (15) umfasst, die aus einem ersten Material hergestellt ist, das eine erste Härte aufweist und die Oberseite (42) bildet, und eine untere Schicht (16), die aus einem zweiten Material hergestellt ist, das eine zweite Härte aufweist und die Unterseite (43) bildet, wobei die zweite Härte der unteren Schicht (16) größer als die erste Härte der oberen Schicht (15) ist,
wobei die untere Schicht (16) Flexibilisierungsausnehmungen (16a) aufweist, wobei die untere Schicht (16) ohne Berücksichtigung der Flexibilisierungsausnehmungen (16a) eine konstante oder etwa konstante Dicke aufweist,
wobei das Förderband **dadurch gekennzeichnet ist, dass** mindestens eine Dicke (F) der seitlichen Bandteile (D) größer ist als mindestens eine Dicke (G) des zentralen Bandteils (C), wodurch mindestens ein Überdickenbereich (47) auf jedem der seitlichen Bandteile (D) ausgebildet wird, wobei sich der Überdickenbereich (47) jedes seitlichen Bandteils (D) aus der Oberseite (42) des Förderbands (4) derart hervorstehend erstreckt, dass ein Relief gebildet wird, wobei die Oberseite (42) zwischen den Überdickenbereichen (47) eben ist.

2. Endlosförderband nach Anspruch 1, **dadurch gekennzeichnet, dass** mindestens eine Dicke (F) der seitlichen Bandteile (D) größer als alle Dicken (G) des zentralen Bandteils (C) ist.

3. Endlosförderband nach einem der Ansprüche 1 oder 2, **dadurch gekennzeichnet, dass** die Dicke (F) mindestens eines Teils der seitlichen Bandteile (D) ausgehend vom nahen seitlichen Bandrand (44) konstant und größer als alle Dicken (G) des zentralen Bandteils (C) ist.

4. Endlosförderband nach einem der Ansprüche 1 bis 3, **dadurch gekennzeichnet, dass** mindestens eine Dicke (F) der seitlichen Bandteile (D) um mindestens 15 % größer als mindestens eine Dicke (G) des zentralen Bandteils (C) ist.

5. Endlosförderband nach Anspruch 4, **dadurch gekennzeichnet, dass** mindestens eine Dicke (F) der seitlichen Bandteile (D) um mindestens 30 % größer als mindestens eine Dicke (G) des zentralen Bandteils (C) ist.

6. Endlosförderband nach Anspruch 5, **dadurch gekennzeichnet, dass** mindestens eine Dicke (F) der seitlichen Bandteile (D) um mindestens 50 % größer als mindestens eine Dicke (G) des zentralen Bandteils (C) ist.

7. Endlosförderband nach einem der Ansprüche 1 bis 6, **dadurch gekennzeichnet, dass** die obere Schicht (15) eine konstante zentrale Dicke und verdickte Seitenabschnitte besitzt, die die Überdickenbereiche (47) bilden.

8. Endlosförderband nach einem der Ansprüche 1 bis 7, **dadurch gekennzeichnet, dass** die untere Schicht (16) eine Dicke besitzt, die um 1,1 mm, vorzugsweise um 1 mm kleiner ist.

9. Endlosförderband nach einem der Ansprüche 1 bis 8, **dadurch gekennzeichnet, dass** es eine Vielzahl längs verlaufender Verstärkungsorgane (46) umfasst, die in seiner Dicke angeordnet sind, die zur Begrenzung seiner Längslängungsmöglichkeiten geeignet sind, wobei die Verstärkungsorgane (46) nur auf den Übergangsbereichen (B) der Bandbreite (L) positioniert sind, die sich bei ¼ oder zirka bei ¼ der Breite (L) beiderseits der Mittenebene (X) befinden.

10. Endlosförderband nach Anspruch 9, **dadurch gekennzeichnet, dass** die längs verlaufenden Verstärkungsorgane (46) seitlich in den Übergangsbereichen (B) zentriert sind.

11. Endlosförderband nach Anspruch 9, **dadurch gekennzeichnet, dass**, wobei jeder Übergangsbereich eine Mittelebene umfasst, die längs verlaufenden Verstärkungsorgane (46) seitlich im Verhältnis zur Mittelebene der Übergangsbereiche (B) zu den Enden des Förderbands versetzt sind.

12. Endlosförderband nach einem der Ansprüche 1 bis 11, **dadurch gekennzeichnet, dass** es hervorstehende einteilige Erhebungen (45) umfasst, die auf seiner Unterseite (43) gleichmäßig verteilt sind, die zum Zusammenwirken mit den Antriebsmitteln (6) der Fördervorrichtung (1) geeignet sind, um den Antrieb des Förderbands (4) sicherzustellen.

13. Fördervorrichtung für den Transport vor allem von losen Produkten, beispielsweise vom Typ geriebener Käse, Gemüse, Hackfleisch, Fisch oder Fischstücke, und zwar von einer unteren Ebene auf eine obere Ebene, wobei die Fördervorrichtung (1) umfasst:
- ein Endlosförderband (4) nach einem der Ansprüche 1 bis 12,
- zwei Umlenkstrukturen an den Enden (5, 6), eine untere vorgelagerte (5) und die andere obere nachgelagerte (6), wobei das Endlosförderband (4) im Bereich dieser Umlenkstrukturen (5, 6) eine ebene oder etwa ebene Querkonfiguration aufweist, wobei die Oberseite (42) des Endlosförderbands (4), die zur Aufnahme der Produkte bestimmt ist, zwischen den Umlenkstrukturen (5, 6) mindestens einen konkaven gekrümmten Abschnitt (9) und mindestens einen aufsteigenden Hubabschnitt (10) aufweist,
- Mittel, um das Endlosförderband (4) über mindestens einen Teil der Länge des konkaven gekrümmten Abschnitts (9) und des aufsteigenden Hubabschnitts (10) in einer schlauchförmigen Konfiguration mit seinen zwei Seitenrändern (44) im Kontakt oder praktisch im Kontakt miteinander über eine Linie auszubilden, die sich in einer vertikalen Ebene erstreckt, die durch die Längsmittenebene (X) des Förderbands (4) verläuft.

## Claims

1. Endless conveyor belt (4) for a conveyor device, said conveyor belt (4) comprises a belt body (41) with a width (L) and a longitudinal median plane (X), said belt body (41) comprises a top face (42) intended to receive products to be transported, an opposite bottom face (43), intended to cooperate with drive means (5, 6) constituting said conveyor device (1), and two side edges (44) parallel to each other,
- said belt body (41) is transversely deformable between a flat configuration, at rest, and a tubular or at least substantially tubular configuration, wherein the two side edges (44) are connected edge to edge,
- said belt body (41) comprises two transition regions (B) extending longitudinally over said width (L) of said belt body (41), the two transition regions (B) being located 1/4 or approximately 1/4 of said width (L), on either side of said median plane (X),
- said transition regions (B) define between them a central belt portion (C), as well as two side belt portions (D) located between each of them and the nearby belt side edge (44),
- the conveyor belt comprising an upper layer (15) made of a first material having a first hardness and forming said top side (42), and a lower layer (16) made of a second material having a second hardness and forming said bottom face (43), the second hardness of said lower layer (16) being greater than the first hardness of said upper layer (15),
- said lower layer (16) comprising softening recesses (16a), the lower layer (16) comprising a constant or substantially constant thickness, without taking account of said softening recesses (16a),
- the conveyor belt being **characterised in that** at least one thickness (F) of said side belt portions (D) is greater than at least one thickness (G) of said central belt portion (C), forming at least one overthickness region (47) on each of said side belt portion (D), said overthickness region (47) of each side belt portion (D) protruding from the top face (42) of the conveyor belt (4) so as to form a relief, the top face (42) being flat between the overthickness regions (47).

2. Endless conveyor belt according to claim 1, **characterised in that** at least one thickness (F) of said side belt portions (D) is greater than all the thicknesses (G) of said central belt portion (C).

3. Endless conveyor belt according to any one of claims 1 or 2, **characterised in that** the thickness (F) of at least one portion of said side belt portions (D), from the nearby belt side edge (44), is constant and greater than all thicknesses (G) of said central belt portion (C).

4. Endless conveyor belt according to any one of claims 1 to 3, **characterised in that** at least one thickness (F) of said side belt portions (D) is at least 15% greater than at least one thickness (G) of said central belt portion (C).

5. Endless conveyor belt according to claim 4, **characterised in that** at least one thickness (F) of said side belt portions (D) is at least 30% greater than at least one thickness (G) of said central belt portion (C).

6. Endless conveyor belt according to claim 5, **characterised in that** at least one thickness (F) of said side belt portions (D) is at least 50% greater than at least one thickness (G) of said central belt portion (C).

7. Endless conveyor belt according to one of claims 1 to 6, **characterised in that** the upper layer (15) has a constant central thickness and thickened side portions forming the overthickness regions (47).

8. Endless conveyor belt according to one of claims 1 to 7, **characterised in that** the lower layer (16) has a thickness of less than 1.1 mm, preferably less than 1 mm.

9. Endless conveyor belt according to any one of claims 1 to 8, **characterised in that** it comprises a plurality of longitudinal reinforcement members (46), arranged in its thickness, adapted to limit its possibilities of longitudinal elongation, said reinforcement members (46) are positioned only on said transition regions (B) of said belt width (L), located at 1/4 or approximately 1/4 of said width (L), on either side of said median plane (X).

10. Endless conveyor belt according to claim 9, **characterised in that** the longitudinal reinforcement members (46) are centred laterally in the transition regions (B).

11. Endless conveyor belt according to claim 9, **characterised in that**, each transition region comprising a middle plane, the longitudinal reinforcement members (46) are offset laterally with respect to the middle plane of the transition regions (B) towards the ends of the conveyor belt.

12. Endless conveyor belt according to any one of claims 1 to 11, **characterised in that** it comprises one-piece protruding studs (45), evenly distributed on its underside (43), adapted to cooperate with said drive means (6) of said conveyor device (1) to drive said conveyor belt (4).

13. Conveyor device for transporting bulk products in particular, for example grated cheese, vegetables, minced meat, fish or pieces of fish, from a lower level to a higher level, said conveyor device (1) comprises:
- an endless conveyor belt (4) according to any one of claims 1 to 12,
- two end deflector structures (5, 6), one lower upstream (5) and one upper downstream (6), at which said deflector structures (5, 6) said endless conveyor belt (4) has a flat or substantially flat transversal configuration, the top face (42) of said endless conveyor belt (4), intended to receive said products, comprising, between said deflector structures (5, 6), at least one concave curved section (9) and at least one elevating ascending segment (10),
- means for conforming said endless conveyor belt (4) in a tubular configuration, on at least one portion of the length of said concave curved section (9) and of said elevating ascending segment (10), with its two side edges (44) in contact with or practically in contact with each other on a line extending in a vertical plane passing through the longitudinal median plane (X) of said conveyor belt (4).
